# EUROPEAN PATENT APPLICATION

(11) **EP 4 614 917 A1**
(43) Date of publication of application: **10.09.2025**
(21) Application number: 24162421.2
(22) Date of filing: 08.03.2024
(51) Int. Cl.: H04L 41/0806, H04L 41/0816, H04L 41/0823, H04L 41/08, H04L 41/12, H04L 41/14, H04L 41/16, H04L 41/22, H04L 43/062, H04L 43/0882, H04W 24/02, H04W 28/16, H04W 84/18, H04L 41/147, H04L 43/16

(54) **A METHOD FOR ADJUSTING RADIO COMMUNICATION RESOURCES IN A COLLABORATION OF INDUSTRIAL UNITS**

(71) Applicant: Siemens Aktiengesellschaft, 80333 München (DE)
(72) Inventor: Bahr, Michael, 81827 München (DE); Michailow, Nicola, 81825 München (DE); Ak, Serkan, 81829 München (DE)
(74) Representative: Siemens Patent Attorneys

(57) **Abstract**

The disclosed embodiments suggest methods for adjusting radio communication resources in a collaboration of industrial units. In one embodiment a method is suggested which is based on a principle of autonomously determining and modeling the topology of the subnetwork in a topological structure, a graph, and weighting this graph with key measures of communication resources, in particular a link utilization measure or a traffic pattern related to a respective local radio communication links of the commonly shared subnetwork. The topology may be set up adaptive to the industrial processing task of collaborating industrial units while communication resources may be optimally assigned or conserved for other priorities. Future repetitions of the same industrial processing task benefit from previously learned topology associated with the preceding industrial processing task.

## Description

### Technical field

The disclosed embodiments generally relate to the field of industrial units wirelessly communicating in an industrial environment. Specifically, the disclosed embodiments relate to a method for adjusting radio communication resources in a collaboration of industrial units.

### Background

Industrial units in various environments have a number of challenges to utilizing data from a multiplicity of sources ant to exchanging data along collaborating industrial units. Many industrial units or systems have a wide range of computing resources and network capabilities at a location at a given time, for example as parts of the system are upgraded or replaced on varying time scales, as mobile equipment enters or leaves a location. Additionally, many industrial units are positioned in challenging environments, where network connectivity can be variable, where a number of noise sources can be significant an in varied locations, and with portions of the industrial units having high pressure, high noise, high temperature, and corrosive materials.

Accordingly, as used herein, the term industrial unit refers to embedded hardware and software for sensing, actuation, control, etc., which may be synchronized in time with other units, and that interacts with the physical world through physical sensors and actuators, and interacts with the cyber world - e.g., computer systems - through time-sensitive and/or best effort network communication links. For the sake of simplicity, each component in industrial environments may hereinafter be referred to as an industrial unit, since it has long been established in contemporary industrial production that manufacturing machines, autonomous robots, processing stations and even hand tools are communicating with each other or with a control system for the purpose of control, diagnosis, and data collection.

According to a current practice of distributing work and supplying data to industrial units, data is usually managed and distributed amongst industrial units by a central instance such as a manufacturing execution system or the like. As industrial units evolve from wired data transmission to communicative coupling within a wireless campus network, there is increasing emphasis on organizing data flow more effectively and moving task-related data closer to the actual workspace where physical industrial work steps of collaborating industrial units are carried out.

Due to the required high data rate and low latency, communication along the industrial units usually takes place using a direct link connection DC between the industrial units, thereby avoiding an otherwise usual upbound communication channel to a higher-level server or controller. The direct link connection DC between the industrial units is commonly organized by a subnetwork commonly shared along industrial units collaborating on a common task by carrying out physical industrial work steps. The commonly shared subnetwork may be established for a certain task and may be disbanded, terminated, or resolved upon completion of the common task. Industrial units participating in the commonly shared subnetwork may be selected based on various criteria, including their suitability for a respective task, their local proximity, etc.

Although a decentralized communication in a subnetwork may significantly improve the data exchange among industrial units compared to a previous practice of a central control involving an infrastructure of a superordinate umbrella network, there is still a need for optimization to improve communication within the subnetwork. One major problem is that a subnetwork is usually not set up according to the resource requirments of individual industrial units involved - which may vary from device to device - but in an automated manner so that the entire communication links within the subnetwork are set up and operated with a maximum possible resource allocation.

Accordingly, there is a need in the art for automatically adjusting radio communication resources amongst industrial units collaborating within a subnetwork to better accommodate the varying requirements of individual industrial devices during or after the subnetwork is established.

### Summary and description

The present invention relates to a method for adjusting radio communication resources in a collaboration of industrial units communicatively coupled within a wireless campus network, the method including the steps of:
a) providing a plurality of industrial units to collaborate on an industrial processing task;
b) establishing a commonly shared subnetwork for wirelessly interconnecting the plurality of collaborating industrial units using local radio communication links of the commonly shared subnetwork;
c) recording at least one link utilization measure over time on at least one local radio communication link of collaborating industrial units in the commonly shared subnetwork;
d) modeling a topology of the commonly shared subnetwork by a resource graph of nodes formed by collaborating industrial units and connections interconnecting the nodes, at least one of said connections being in topological correspondence to said at least one local radio communication link;
e) assigning the at least one link utilization measure as a weight to at least one of the connections of the resource graph to form a weighted resource graph, said one of the connections being in topological correspondence to the local radio communication link where the link utilization measure is recorded;
f) adjusting the radio communication resources within the collaboration of industrial units by evaluating at least a portion of the weighted resource graph in order to infer at least one action to be applied to one radio communication link in the commonly shared subnetwork;
g) maintaining the weighted resource graph for adjusting the radio communication resources in the commonly shared subnetwork.

The invention is based on a principle of autonomously determining and modeling the topology of the subnetwork in a topological structure, a graph, and weighting this graph with key measures of communication resources, in particular a link utilization measure or a traffic pattern related to a respective local radio communication links of the commonly shared subnetwork.

Autonomously modeling the topology and adjusting the communication resources of the subnetwork is advantageous for saving personnel for manual configuration.

The topology of the sub-network may be determined or learned automatically instead - or in addition - of being manually configurated by human experts. The topology may be set up adaptive to the industrial processing task of the collaborating industrial units while resources - time slots and sub-carriers - may be optimally assigned or conserved for other priorities. Future repetitions of the same industrial processing task may benefit from previously learned topology associated with the preceding industrial processing task.

Additional benefits include opportunities to maintain, modify, or reuse the weighted resource graph. The weighted resource graph may be gradually adjusted in order to adapt to changing network topologies which, in the simplest case, may result in industrial units joining or leaving the subnetwork. The same applies to a gradual adjustment of the radio communication resources which are modeled by the weighted resource graph. Conversely, a change in the network topology may also be the result of an adjustment of the radio communication resources, e.g. in the event that a radio communication link in the commonly shared subnetwork may be terminated due to missing or low link utilization. This termination allows radio communication resources to be saved for other radio communication links of the subnetwork which require higher communication resources. Practically, the topology of the subnetwork is pruned.

Time slots and/or sub-carriers that were previously reserved for the discontinued communication link may then be assigned to continued communication links with a higher resource requirement.

Maintaining the weighted resource graph may also continue in a subnetwork other than the subnetwork for which the weighted resource graph was originally created. One could also say: For which the weighted resource was initially trained, since the invention readily enables embodiments in which the weighted graph is gradually adjusted using machine learning. In summary, the subnetwork according to advantageous embodiments may be characterized by self-learning and self-organizing capabilities. Future adjustments in the same or another subnetwork may benefit from previously learned topology associated with a previous adjustment.

Even in the case of a completely different subnetwork structure, a weighted resource graph previously trained by machine learning may be advantageously used as a starting point or ground truth in order to gradually adapt this weighted resource graph to the current network structure instead of starting from scratch, i.e. in the absence of any ground truth material.

Adjusting the radio communication resources within the collaboration of industrial units may generally include at least one action to be applied to one radio communication link in the commonly shared subnetwork. This action may include scaling back, redirecting, and/or terminating the radio communication link. The action may further include terminating the previous radio communication link in favor of an alternative radio communication link connection or a combination of alternative radio communication links which may be established or diverted from existing links, and which may substantially connect most of the nodes or the same nodes than the previous radio communication link, possibly via a detour.

An alternative radio communication link may be provided by a backup channel which may provide a set of time- and/or frequency resources. The core idea of such a backup channel is to reserve communication resources which may be rarely needed in response to rare events. These rare events may be referred to as a long tail of a probability distribution.

For the case that two industrial devices need to exchange messages after their previous radio communication link was terminated, these two industrial devices may use this backup channel for exchanging the messages. Should this backup channel be continued and/or used sustainably, the subnetwork may be expanded again by an additional radio communication link. Accordingly, said action to be applied to one radio communication link in the commonly shared subnetwork as mentioned above may also include adding a radio communication link.

In summary, adjusting the radio communication resources within the collaboration of industrial units may advantageously result in a flexible mesh topology being fully adaptive in both directions - shrinking and expansion of its topology - while constantly maintaining the capability of the subnetwork to exchange messages between any industrial units.

The optional backup channel may also support a swarm of industrial units to reach a safe state in an emergency situation. In this case, one of the industrial units, e.g. a master device, may need to ensure that sufficient radio resources are constantly present in the subnetwork for emergency situations. Alleviating or preventing emergency situations is generally a critical feature in industrial scenarios and may be smoothly handled using embodiments of the invention.

The present embodiments further relate to an industrial unit comprising a processor and a data storage device having stored thereon computer executable program code, which, when executed by the processor, causes the processor to perform the above method.

The present embodiments further relate to a subnetwork demand orchestrator component for adjusting radio communication resources in a collaboration of industrial units communicatively coupled within a wireless campus network, the subnetwork demand orchestrator component including:
a) a network interface for participating in a commonly shared subnetwork for wirelessly interconnecting a plurality of collaborating industrial units using local radio communication links of the commonly shared subnetwork, the plurality of collaborating industrial units connected to collaborate on an industrial processing task;
b) an acquisition module for recording a link utilization measure over time on at least one local radio communication link of collaborating industrial units in the commonly shared subnetwork, for modeling a topology of the commonly shared subnetwork in a resource graph of nodes formed by the collaborating industrial units and connections interconnecting the nodes and for assigning the link utilization measure as a weight to a connection of the resource graph being in topological correspondence to the at least one local radio communication link;
c) an adjusting module for maintaining the resource graph for adjusting the radio communication resources in the commonly shared subnetwork.

Further possible embodiments are - by no means exhaustive - the subject of dependent claims.

According to an embodiment, establishing a commonly shared subnetwork for wirelessly interconnecting the plurality of collaborating industrial units includes determining a master device amongst the plurality of collaborating industrial units. The master device may be one of the collaborating industrial units which is intended or determined to assume a leading role amongst the collaborating industrial units. In the alternative, the master device may be a collaborating industrial unit having an equipment differing from the other industrial units. A master device may be responsible to request radio communication resources, e.g. time slots and/or sub-carriers, on behalf of the other collaborating industrial units or devices in the commonly shared subnetwork.

The master device may request the local radio communication resources assigned to the subnetwork from a central controller of the wireless campus network, which may also be referred to as an umbrella network.

According to an embodiment, the master device may include a subnetwork demand orchestrator for adjusting the radio communication resources in the commonly shared subnetwork. The subnetwork demand orchestrator or SDO may be software module, e.g. executed on the master device, or a dedicated hardware module. The SDO may collect information about traffic patterns and link usage of various connections or local radio communication links of the commonly shared subnetwork in order to derive a model for the radio communication resources. The SDO may request an adaptation of required radio communication resources from a unit managing the umbrella network or adapt resources within the umbrella network. The SDO may configure radio resource of industrial units and local radio communication links of collaborating industrial units accordingly.

According to an embodiment, the recording of link utilization measures over time may include determining at least one of a utilization of radio resources and a traffic pattern related to one of the local radio communication links of the commonly shared subnetwork.

According to an embodiment, recording link utilization measures over time may include transmitting the recorded link utilization measures to the master device amongst the plurality of collaborating industrial units. The master device may either sense the utilization measures itself or may receive link utilization measures as sensed or recorded by the collaborating industrial units in the commonly shared subnetwork. Various or all collaborating industrial units, including the master device itself, may record traffic patterns and link utilizations as encountered or sensed over their local radio communication links. Traffic patterns and/or link utilizations may be periodically forwarded, alternatively forwarded on demand, to the master device, preferably using a control plane link.

According to an embodiment, recording link utilization measures over time may include using the recording link utilization measures for training a machine-learning model. The master device may use traffic patterns and/or link utilizations as reported from the collaborating industrial units for learning the traffic patterns of one or more local radio communication links using, e.g. machine learning, or artificial intelligence model training. Alternatively, some or all collaborating industrial units may individually maintain and train a local machine leaning model representing local link utilization and/or traffic pattern of the individual industrial unit. The locally maintained machine leaning model may be forwarded to the master device, preferably on the control plane links, in certain time intervals or on demand by the master device. The master device may combine these local machine learning models for deriving a sub-network machine learning model with respect to the traffic patterns of various or each of the radio communication links of the commonly shared subnetwork.

According to an embodiment, adjusting the radio communication resources in the commonly shared subnetwork may include on or more of the following steps of:
- generating a reduced set of connections by reducing or eliminating connections that have a negligible weight based on a link utilization threshold;
- selecting a subset of the weights based on the weights of one of the reduced set of connections;
- generating estimates of future subnetwork behavior for the weights of the one of the reduced set of connections;
- comparing one or more performance scores of the one of the reduced set of connections to the generated estimates and one or more predefined performance score thresholds; and;
- identifying, based on the comparison, a connection to be terminated and outputting an instruction to terminate a radio communication link corresponding to the connection to be terminated.

According to an embodiment, the instruction to terminate the radio communication link may be output to a master device amongst the plurality of collaborating industrial units or to one or more industrial units being connected with the connection to be terminated.

### Description of the drawing

The objects as well as further advantages of the present invention will become more apparent and readily appreciated from the following description of the preferred embodiments, taken in conjunction with the accompanying drawing accompanying drawing of which:
- FIG. 1:: is a schematic diagram illustrating a layered architecture of current and future cellular networks;
- FIG. 2:: is a schematic block diagram representing a logical view of connection assignments within current or future cellular networks; and;
- FIG. 3:: is a schematic block diagram representing an exemplary topology of collaborating industrial units.

### Detailed description

Considerations for an upcoming sixth generation or 6G standard of cellular networks involve improving a network granularity by subnetworks, also referred to as sub-networks, network-of-networks, in-X networks.

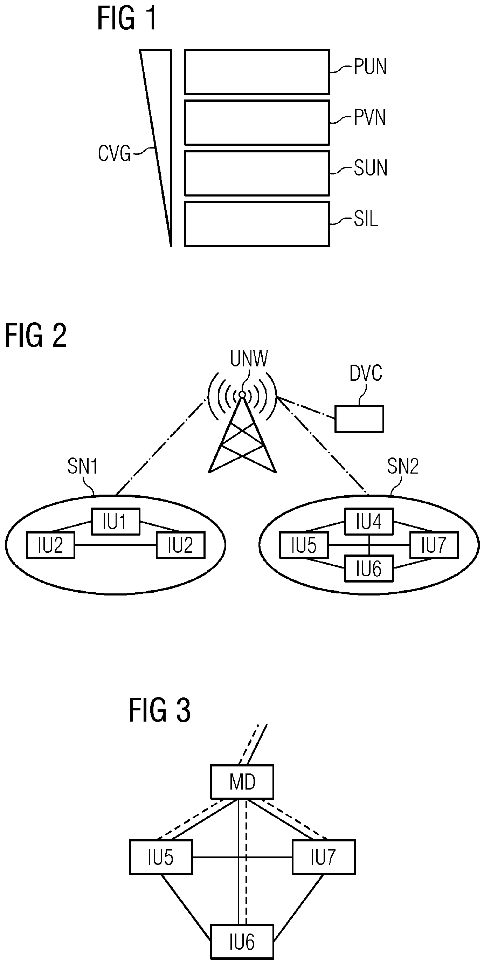

FIG. 1 depicts a schematic diagram illustrating a layered architecture of current and future cellular networks. In the drawing, four layers PUN, PVN, SUN, SIL are represented in a layer sequence with a decreasing ranking from top to bottom, where the ranking corresponds to a number of participating devices or coverage CVG involved in the respective layers PUN, PVN, SUN, SIL. A number of participating devices decreasing from the top layer PUN to the bottom layer SIL is symbolized by a triangular-shaped coverage ranking CVG symbol left to the layers PUN, PVN, SUN, SIL. The layers of the current and future cellular networks may include one of a public network PUN, a private network PVN, a subnetwork SUN and a sidelink SIL.

While the concept of a public network PUN has been commonly known since the advent of cellular communications, a concept of private networks PVN or campus networks has only been known since a fifth generation - or 5G according to the 3GPP (third generation partnership project) - standard of cellular networks or since an emerging sixth generation - or 6G according to the 3GPP (third generation partnership project) - standard. The concept of subnetworks SUN will be introduced in an upcoming release of the fifth generation or 5G standard, while the concept of a sidelink SIL was already implemented in the fourth generation or 4G standard of cellular networks.

Subnetworks SUN are network topologies that form for a certain period of time at a certain location. In industrial environments, these subnetworks SUN may be used by collaborating industrial entities for the purpose of exchanging information necessary to perform a joint task. Subnetworks SUN may be particularly suitable for implementing embodiments according to this disclosure. Data and information exchanged for the purpose of collaboration is relevant only within a subnetwork. Hence, a subnetwork is motivated by the desire to keep locally relevant information locally. Assuming physical proximity of the industrial devices allows the subnetwork participants to use lower transmission power compared to communication with a general campus network infrastructure. This, in turn, allows for better frequency re-use for a given shop floor area. Better frequency re-use can be traded in for increasing the number of devices per area, achieving lower latencies, energy efficiency and/or improving determinism in order to gain robustness.

Sidelink communications SIL generally include messaging between wireless nodes such as vehicles, sensors, and other devices. In 5G and 6G, sidelink communications SIL may be generally managed according to rigid protocols and schedules, either by a base station intermediary or by one of the user devices acting as a temporary base station.

The reader will appreciate however, that communication environments or prerequisites of the embodiments are in no way limited to the types and/or generations of communications networks as mentioned above. Specifically, the embodiments are neither limited to 5G, nor the use of private networks, nor sidelink communications. Although these types and/or generations of communication networks may be of course an environment of choice, the embodiments may be equally realized with wireless communication standards such as WiFi and/or ad-hoc communication links.

According to an industrial perspective, subnetworks in industrial environments may be seen as communication structures that form for a certain period of time at a certain location. Subnetworks may be used by industrial devices, e.g., autonomous robots, for the purpose of collaboration in performing a common task. A swarm of autonomous mobile robots may collaboratively transport a heavy load. Once the task is complete, the mobile robots may leave the sub-network.

FIG. 2 shows a schematic block diagram representing a logical view of connection assignments in a cellular network showing some architectural principles of the embodiments. A wireless umbrella network UNW symbolized by a transmission tower is implemented by one or more umbrella network base stations UNW. As shown in FIG. 4, the umbrella network UNW may connect two subnetworks SN1, SN2 and a device DVX with respective global communication links symbolized by dash-dotted lines. The device DVC may be any exemplary industrial entity which is not part of one of the two subnetworks SN1, SN2. This device DVC may be, for example, an industrial 5G router, for example of a type designated SCALANCE MUM 856 as manufactured by the applicant.

The umbrella network UNW may preferably be configured as a private cellular network or campus network in order to maintain industrial confidentiality requirements in contrast to a public cellular network.

A first group of industrial units IU1, IU2, IU3 may be assigned to a first subnetwork SN1 whereby the industrial units IU1, IU2, IU3 in this first subnetwork SN1 are interconnected by local communications links, which are shown in the drawing as thin solid lines between the industrial units IU1, IU2, IU3. A second group of industrial units IU4, IU5, IU6, IU7 may be assigned to a second subnetwork SN2, the industrial units IU4, IU5, IU6, IU7 in this second subnetwork SN2 also being interconnected by local communications links. Dependent on a specific functional focus, these industrial units IU1, IU12, ... IU5, IU7 may also be referred to as a cyber-physical units or as cyber-physical systems.

According to embodiments of the disclosure, some or more subnetworks SN1, SN2 may be formed in a way to gather task- and/or location-similarities of respectively involved communication partners, e.g., as shown in a first group of industrial units IU1, IU2, IU3 gathered in the first subnetwork SN1 and the second group of industrial units IU4, IU5, IU6, IU7 gathered in the second subnetwork SN2.

According to embodiments of the disclosure, some or more subnetworks SN1, SN2 may include one or more location-bound subnetworks and/or one or more nomadic subnetworks. A location-bound subnetwork is understood as a subnetwork permanently bound - or at least bound for a longer period of time - to a specific location, e.g. bound to a manufacturing cell. A nomadic subnetwork is understood as a subnetwork being capable of moving over time. A nomadic subnetwork may e.g. consist of a swarm of industrial units transporting a work piece across the factory.

In both cases, industrial units that participate in the subnetwork may be physically co-located.

One of the industrial units IU1, IU2, IU3 collaborating in the first subnetwork SN1 may be assigned a leading function namely to act as a master device. In the following it is assumed that the first industrial unit IU1 is the master device within the first subnetwork S1 and that the fourth industrial unit IU4 is the master device within the second subnetwork S2. The leading function or role of the master device IU1, IU4 may be due to a particular equipment of the master device compared to other industrial units. The master device may also have identical equipment compared to other industrial units. One of the duties of a master device is to request resources - e.g. requesting time slots or sub-carriers - from the umbrella network UNW on behalf of the other industrial devices in the subnetwork. One major duty of the master device may be to request resources (time slots & sub-carriers) from the umbrella network UNW on behalf of the other devices in the subnetwork.

All industrial devices IU1, IU2, IU3, ..., IU6, IU7 including the master devices IU1,IU4 are assumed to be within a radio coverage of the umbrella network UNW. Each device IU1, IU2, IU3, IU3 within the first subnetwork SN1 may directly communicate with any other device IU3, IU1, IU2 within the first subnetwork SN1, which may be accordingly referred to as fully connected sub-network SN1. The same is true for the second subnetwork.

FIG. 3 shows a schematic block diagram representing an exemplary topology of collaborating industrial units IU5, IU6, IU7 and a master device MD which may be an industrial unit itself and which is also referred to as industrial unit in the following. The industrial units MD, IU5, IU6, IU7 may exchange messages based on a device-to-device communication or D2D, e.g., NR sidelink mode 1 or 2 or, alternatively: IEEE 802.11 ad hoc mode, IEEE 802.11s. Many other options for realizing device-to-device communication are feasible with any radio access technology regardless of what kind of multiple access scheme is used.

Each of the industrial units MD, IU5, IU6, IU7 may be connected to each other of the industrial units IU5, IU6, IU7, MD via a user plane link, which is symbolized in the drawing with a respective solid line. The master device MD may be connected to one of the other industrial units IU5, IU6, IU7 via a control plane link, which is symbolized in the drawing with a respective dashed line. The master device MD may be connected to the umbrella network via a user plane link and a via a control plane link which is symbolized in the drawing with a respective dashed and solid line pointing upwards.

Control plane links or connections may expand between each industrial unit IU5, IU6, IU7 and the master device MD. Messages on the control plane may include resource allocation requests sent from the master device MD to one of the industrial units IU5, IU6, IU7. Messages on the control plane may further include traffic patterns or link usage report messages sent from one of the industrial units IU5, IU6, IU7 to the master device.

Data Packets are in turn transmitted over the user plane connections. They are between any device (Master Device, Devices), so that any device can send user data directly to any other device.

They are exchanged between ana industrial unit MD, IU5, IU6, IU7 including the master device MD, so that any industrial unit MD, IU5, IU6, IU7 can send user data directly to any other industrial unit IU5, IU6, IU7, MD. User plane transfer usually require significantly more radio resources than the control plane transfers.

In the setting as shown, an optimization task arises as to how the radio resources may be optimally distributed in order to implement the links within the subnetwork. Although a fully connected subnetwork as shown in Fig. 3 may be the most flexible option, it may not be the most resource efficient option. The embodiments propose a method to adjust the resource allocation for the links in the subnetwork to the traffic pattern and link usage by the application or task which the industrial units MD, IU5, IU6, IU7 of the subnetwork are performing during runtime. Resource allocation is related to the capacity of the links in the subnetwork.

Preferably, only the user plane (UP) links are to be optimized - as they require large parts of the radio resources - while the control plane (CP) links may preferably remain active all time, as the master device MD may need channels on the control plane (CP) links to assign - including reduce or increase - radio resources to the other nodes. Assigning radio resources to other nodes may include reducing or increasing the radio resources of the other nodes.

According to an embodiment, an SDO or subnetwork demand orchestrator is provided, the SDO being a software component which may be executed in the master device. The tasks of the SDO are to collect information about the traffic patterns and link usage of a multiplicity of links in the subnetwork in order to derive a model for the necessary radio resources on the links of the subnetworks. The SDO requests or adapts with needed resources with the umbrella network and configures radio resource of the industrial units or other nodes and wireless links in the subnetwork accordingly. According to an embodiment, a method is carried out as follows.

In a beginning step, a commonly shared subnetwork for wirelessly interconnecting a plurality of collaborating industrial units using local radio communication links of the commonly shared subnetwork is established or maintained. The subnetwork may be characterized to consist of a certain set of industrial devices D which are initialized for a specific industrial processing task T with a fully-connected subnetwork of device-to-device (D2D) links (direct wireless links) which may form a graph *G*₀.

In a subsequent step, link utilization measures are recorded over time on at least one local radio communication link of collaborating industrial units. Traffic pattern of each D2D link or segment in the sub-network may be learned during the lifetime of the subnetwork in order to derive a probability distribution for the utilization and/or capacity needs of the D2D link or segment. One or more link utilization measures on at least one local radio communication link are recorded over time and assigned as a weight to the corresponding connection of the resource graph - i.e. to the connection being in topological correspondence to the local radio communication link where the link utilization measure is recorded - to form and amend the weighted resource graph.

The weighted graph contains a mathematical representation of the topography of the local radio communication links as connections - being in topological correspondence to the local radio communication links - interconnecting nodes - in topological correspondence to the collaborating industrial units - and furthermore the link utilization measure as weights in the connections, so that a subsequent adjustment of the radio communication resources - evaluating at least a portion of the weighted resource graph - does not involve significant structural complexity, but data processing manageability.

After or while the weighted graph is setup, the radio communication resources in the common subnetwork are adjusted. According to an embodiment, evaluating the weighted resource graph - or at least a portion of the weighted resource graph - includes applying at least one machine learning model to one or more portions of the weighted resource graph for identifying underload, overload or imbalances of at least one link utilization measure in one or more in one or more radio communication links. Identifying underload, overload or imbalances of a specific link utilization measure may be done in comparison to one or more link utilization measures in one or more local radio communication links which are different from the local radio communication link to which the specific link utilization is associated. The traffic patterns may be learned using one or more of the following methods:
- The master device may sense a utilization of the assigned radio resources, e.g., using a promiscuous mode or energy detection. The master device may use this utilization data for learning the traffic patterns of each D2D link using, e.g., machine learning, or Al model training.
- One or more industrial devices may record their traffic patterns and/or link utilizations to obtain at least one link utilization measure which may be forwarded to the master device in periodic or non-periodic intervals. Forwarding the utilization measure may take place as needed, a real-time transmission is not necessary. The forwarding preferably takes place on the control plane links. The master device MD may use this utilization measures or further data on the traffic patterns from the industrial devices for machine learning or Al model training of the traffic patterns of each local radio communication link or D2D link of collaborating industrial units in the commonly shared subnetwork.
- One or more industrial devices may train a local machine learning model which represents their link utilization and/or traffic patterns. This local machine learning model may be forwarded to the master device MD, preferably on the control plane links. The master device MD may combine the local machine learning models for deriving a sub-network local machine learning model for the traffic patterns of each local radio communication link or D2D link.

The longer the sub-network is in operation, the higher the confidence in the utilization probabilities and/or expected traffic patterns of each local radio communication link.

After a certain pre-defined confidence threshold - or, alternatively: dynamically
found confidence threshold - is reached, the radio communication resources - in particular the radio resources on the user plane - allocated to a certain local radio communication link may be reduced. Reducing the user plane resources allocated to a certain local radio communication link may include decreasing or releasing, by the master device MD, the resources - e.g. time and/or frequency resources - associated with the local radio communication link.

Reducing the user plane resources allocated to this specific local radio communication link may further include reporting released resources as available for further disposition by the umbrella network base stations UNW, whereby the umbrella network base stations UNW may subsequently assign released resources to other instances in the umbrella network UNW, e.g., to a master device in a different subnetwork. Alternatively - instead of reporting user plane resources to be released towards the umbrella base station - the master device MD may initiate a rebalancing of the user plane resources within its own subnetwork.

By modeling a topology of the commonly shared subnetwork in a resource graph of nodes - topologically formed by collaborating industrial units - and connections interconnecting the nodes - being in topological correspondence to the local radio communication links - and assigning the at least one link utilization measure as a weight to connections of the resource graph, a task-, device- and time-specific weighted resource graph *G*(*D, T, t*) may be set up, maintained and amended by machine learning and stored for future use. Maintaining the weighted resource graph may also continue in a subnetwork other than the subnetwork for which the weighted resource graph was originally created.

The next time the same industrial processing task T is assigned to another, same or similar set of industrial devices D the master device MD may perform the resource allocation based on the previously learned weighted resource graph *G*₀ = *G*(*D, T, t*) or use the previously learned, stored weighted resource graph as an advantageous starting point for learning current traffic patterns and link utilizations.

Learning the probability distributions and traffic patterns for utilization of certain communication links in the graph may be done with something as simple as a histogram. Alternatively, sophisticated machine learning models, e.g., recurrent neural networks or RNN, may be trained to predict the probability distributions based on a variety of input parameters, including past observations of data packets transmitted within the subnetwork.

A previously learned weighted resource graph *G*₀ may be learned from previous executions of the task and/or designed by or with the assistance of a human expert and/or provided by the industrial processing task on which the same or other industrial units have previously collaborated, or a combination - e.g., weighted superposition - thereof one of the aforementioned.

In a further embodiment, also internal or task-specific states of application agents operating in one or more industrial devices may be communicated from the application agents to the master device MD in order to be contribute to the training of the machine learning.

The present embodiments are not restricted to a certain communication protocol, meaning by design being invariant to a certain kind of media access employed by the industrial devices. In this way, all types of communication protocols may be used by the industrial devices and the master device operating according to the embodiments, including frequency-division multiple access or FDMA, time-division multiple access or TDMA, code-division multiple access or CDMA, etc., or a combination thereof.

According to embodiments, the master device MD may provide radio communications - or a set of radio communication resources - as a backup channel in order to reserve communication resources which may be rarely needed in response to rare events.

In a case where two industrial devices need to exchange messages after their previous radio communication link was terminated, these two industrial devices may use the backup channel for exchanging the messages. Should this backup channel be continued and/or used sustainably, the subnetwork may be expanded again by an additional radio communication link or, in other words, the master Device may expand the weighted resource graph *G*(*D, T, t*) by an additional connection in order to eventually expand the subnetwork by an additional local radio communication link.

Hence, as the industrial processing task T may not necessarily be time-invariant - which means that the communication requirements may change in time - or as there may be one or more local radio communication links of the commonly shared subnetwork by which messages are exchanged only sparsely, embodiments providing a backup channel allow for a fully adaptive mesh topology in both directions (shrinking and expansion of *G*(*D,T, t*))*,* while constantly maintaining the ability to exchange messages at any time.

Instead of initiating the subnetwork with a fully connected mesh graph *G*₀, the industrial processing task T may be simulated using a digital twin of the subnetwork and/or umbrella network to arrive at a more specific graph *G*(*D, T, t*) adapted to the simulated environment using machine learning in the simulation environment.

In the following, the subnetwork demand orchestrator or SDO is described. The master device MD may include a subnetwork demand orchestrator - not shown - for adjusting the radio communication resources in the commonly shared subnetwork. The subnetwork demand orchestrator or SDO may be software module, e.g. executed on the master device, or a dedicated hardware module. The SDO may include a network interface - not shown - for participating in the commonly shared subnetwork, an acquisition module for recording the link utilization measure over time and an adjusting module for maintaining the resource graph for adjusting the radio communication resources in the commonly shared subnetwork.

The SDO may collect information about traffic patterns and link usage of various connections or local radio communication links of the commonly shared subnetwork in order to derive a model for the radio communication resources. The SDO may request an adaptation of required radio communication resources from a unit managing the umbrella network or adapt resources within the umbrella network. The SDO may configure radio resource of industrial units and local radio communication links of collaborating industrial units accordingly.

In summary, the disclosed embodiments suggest a method for adjusting radio communication resources in a collaboration of industrial units. A suggested method is based on a principle of autonomously determining and modeling the topology of the subnetwork in a topological structure, a graph, and weighting this graph with key measures of communication resources, in particular a link utilization measure or a traffic pattern related to a respective local radio communication links of the commonly shared subnetwork. The topology may be set up adaptive to the industrial processing task of the collaborating industrial units while resources - time slots and sub-carriers - may be optimally assigned or conserved for other priorities. Future repetitions of the same industrial processing task may benefit from previously learned topology associated with the preceding industrial processing task.

## Claims

1. A method for adjusting radio communication resources in a collaboration of industrial units communicatively coupled within a wireless campus network, the method including the steps of:
a) providing a plurality of industrial units to collaborate on an industrial processing task;
b) establishing a commonly shared subnetwork for wirelessly interconnecting the plurality of collaborating industrial units using local radio communication links of the commonly shared subnetwork;
c) recording at least one link utilization measure over time on at least one local radio communication link of collaborating industrial units in the commonly shared subnetwork;
d) modeling a topology of the commonly shared subnetwork by a resource graph of nodes formed by collaborating industrial units and connections interconnecting the nodes, at least one of said connections being in topological correspondence to said at least one local radio communication link;
e) assigning the at least one link utilization measure as a weight to at least one of the connections of the resource graph to form a weighted resource graph, said one of the connections being in topological correspondence to the local radio communication link where the link utilization measure is recorded;
f) adjusting the radio communication resources within the collaboration of industrial units by evaluating at least a portion of the weighted resource graph in order to infer at least one action to be applied to one radio communication link in the commonly shared subnetwork;
g) maintaining the weighted resource graph for adjusting the radio communication resources in the commonly shared subnetwork.

2. The method according to claim 1, wherein establishing a commonly shared subnetwork for wirelessly interconnecting the plurality of collaborating industrial units includes determining a master device amongst the plurality of collaborating industrial units.

3. The method according to claim 2, wherein the master device includes a subnetwork demand orchestrator for adjusting the radio communication resources in the commonly shared subnetwork.

4. The method according to claim 1, wherein recording link utilization measures over time includes determining at least one of a utilization of radio resources and a traffic pattern related to one of the local radio communication links of the commonly shared subnetwork.

5. The method according to claim 1, wherein recording link utilization measures over time includes transmitting the recorded link utilization measures to a master device amongst the plurality of collaborating industrial units.

6. The method according to claim 1, wherein recording link utilization measures over time includes using the recording link utilization measures for training a machine-learning model.

7. The method according to claim 1, wherein evaluating one or more portions of the weighted resource graph includes applying at least one machine learning model to said one or more portions of the weighted resource graph for identifying underload, overload or imbalances of at least one link utilization measure in one or more in one or more local radio communication links.

8. The method according to claim 1, wherein adjusting the radio communication resources in the commonly shared subnetwork includes the steps of:
- generating a reduced set of connections by reducing or eliminating connections that have a negligible weight based on a link utilization threshold;
- selecting a subset of the weights based on the weights of one of the reduced set of connections;
- generating estimates of future subnetwork behavior for the weights of the one of the reduced set of connections;
- comparing one or more performance scores of the one of the reduced set of connections to the generated estimates and one or more predefined performance score thresholds; and;
- identifying, based on the comparison, a connection to be terminated and outputting an instruction to terminate a radio communication link corresponding to the connection to be terminated.

9. The method according to claim 8, wherein the instruction to terminate the radio communication link is output to a master device amongst the plurality of collaborating industrial units or to one or more industrial units being connected with the connection to be terminated.

10. The according to claim 1, wherein adjusting radio communication resources in the collaboration of industrial units

11. A subnetwork demand orchestrator component for adjusting radio communication resources in a collaboration of industrial units communicatively coupled within a wireless campus network, the subnetwork demand orchestrator component including:
a) a network interface for participating in a commonly shared subnetwork for wirelessly interconnecting a plurality of collaborating industrial units using local radio communication links of the commonly shared subnetwork, the plurality of collaborating industrial units connected to collaborate on an industrial processing task;
b) an acquisition module for recording a link utilization measure over time on at least one local radio communication link of collaborating industrial units in the commonly shared subnetwork, for modeling a topology of the commonly shared subnetwork in a resource graph of nodes formed by the collaborating industrial units and connections interconnecting the nodes and for assigning the link utilization measure as a weight to a connection of the resource graph being in topological correspondence to the at least one local radio communication link;
c) an adjusting module for maintaining the resource graph for adjusting the radio communication resources in the commonly shared subnetwork.
